# DEMANDE DE BREVET EUROPEEN

(11) **EP 0 837 273 A1**
(43) Date de publication de la demande: **22.04.1998**
(21) Numéro de dépôt: 97402187.5
(22) Date de dépôt: 19.09.1997
(51) Int. Cl.: F16K 17/28, F16K 15/18

(54) **Dispositif de réarmement d'un obturateur**

(30) Priorité: 21.10.1996 FR 9612737
(71) Demandeur: BRIFFAULT, Société dite:, F-75011 Paris (FR)
(72) Inventeur: Morel, Marc, 76300 Sotteville-les-Rouen (FR); Schladerer, Max, 27610 Romilly-sur-Andelle (FR)
(74) Mandataire: Eidelsberg, Victor Albert

(57) **Abrégé**

Dans ce conduit, constitué de deux tronçons (31, 33) enfilés l'un dans l'autre avec possibilité de déplacement d'un état de réarmement à un autre état, les moyens (32) de séparation de l'obturateur (40) et du siège (39) sont disposés en amont de l'obturateur (40).

## Description

La présente invention se rapporte aux conduits constitués de deux tronçons enfilés l'un dans l'autre et retenus l'un à l'autre par des moyens de retenue tels qu'ils autorisent un déplacement de l'un des tronçons par rapport à l'autre d'un état de réarmement dans lequel des moyens d'obturation ne peuvent pas empêcher du fluide de passer d'amont en aval à un autre état dans lequel les moyens d'obturation peuvent prendre une position empêchant du fluide de passer ou une position en laissant passer.

Par tronçon d'un conduit, on entend, dans le présent mémoire, aussi bien un tube souple qu'un tuyau rigide ou élastique et qu'une tubulure issue d'un appareillage. Le tronçon peut également être un conduit en forme de rotule ou autre.

L'invention trouve une application de choix dans les conduits de gaz. Lorsqu'une bouteille de gaz est reliée à l'appareil utilisateur par un conduit, il est souhaitable, en cas d'excès de débit, par exemple parce que le conduit n'est pas relié à la gazinière ou par rupture du conduit issu de la gazinière, d'avoir une sécurité. Il convient néanmoins de réarmer lorsque la cause de l'excès de débit a disparu.

Au brevet des Etats Unis d'Amérique 4 638 835, on décrit un dispositif de réarmement mettant en oeuvre un grand nombre de pièces, volumineux et nécessitant d'appuyer sur un bouton poussoir. Lorsque l'appareil auquel est relié le conduit comporte déjà un certain nombre de boutons de commande, l'utilisateur peut effectuer de fausses manipulations en se trompant de boutons.

Au WO95/05554, des moyens d'obturation comportent un obturateur appliqué sur un siège porté par l'un des tronçons et il est prévu des moyens de séparation de l'obturateur et du siège pour venir dans l'état de réarmement. Le dispositif de sécurité prévu à ce document antérieur, outre, qu'il est d'une grande complexité parce qu'il prévoit notamment nécessairement une chambre à détecteur et une chambre de pression, présente l'inconvénient grave de provoquer des pertes de charge en aval de l'obturateur.

L'invention pallie ces inconvénients par un conduit très simple à fabriquer et qui cependant ne provoque pas de perte de charge en aval de l'obturateur, le réarmement s'effectuant toutefois par un mouvement que l'utilisateur a tendance naturellement à effectuer lorsqu'il constate que du gaz ne sort plus du conduit et sans possibilité d'erreur de manipulation.

Suivant l'invention, les moyens de séparation sont disposés en amont de l'obturateur.

Ainsi disposés, ils ne peuvent pas créer de perte de charge en aval. Le conduit suivant l'invention ne prévoit pas de pièces destinées à former une chambre de pression en aval du siège.

Suivant un mode de réalisation, les moyens de séparation comportent un élément qui n'est pas symétrique par rapport à l'axe de l'un des tronçons de manière à appliquer à l'obturateur, lorsqu'il vient en contact avec celui-ci une force ayant une composante radiale suffisante pour séparer l'obturateur du siège. L'élément vient en contact avec l'obturateur en l'état de réarmement. De préférence, l'élément est solidaire du tronçon qui ne porte pas le siège et, de préférence, il est d'une pièce avec ce tronçon. On obtient ainsi un mode de réalisation particulièrement simple et peu coûteux, tant à fabriquer qu'à monter.

On préfère que les moyens de retenue autorisent un déplacement suivant l'axe commun des tronçons avec possibilité de rotation d'un tronçon par rapport à l'autre, de manière à s'adapter au mieux aux conduits dans lesquels une rotation est nécessaire pour le raccordement. Mais on peut prévoir aussi un déplacement relatif par une inclinaison de l'un des tronçons par rapport à l'autre.

Suivant un autre mode de réalisation de l'invention, les moyens de séparation comportent un élément destiné à déformer et à repousser le siège pour venir dans l'état de réarmement. Cela permet de se dispenser d'un agencement dissymétrique de l'élément agissant sur l'obturateur, tout en ayant, même en amont du siège, peu de perte de charge au milieu du conduit, puisque, comme dans le mode de réalisation à élément qui n'est pas de symétrie par rapport à l'axe, l'élément est reporté radialement vers l'extérieur.

Les moyens de séparation peuvent comporter également un élément solidaire de moyens de rappel ramenant les tronçons de l'état de réarmement à l'autre état, cet élément solidaire des moyens de rappel, qui sont habituellement un simple ressort, étant monté de manière à venir en contact avec l'obturateur ou avec le siège en l'état de réarmement. On peut ainsi conserver toujours la position en amont des moyens de séparation, qui donne l'assurance de ne pas provoquer de perte de charge.

Dans un autre mode de réalisation, l'obturateur est en un matériau magnétique et les moyens de séparation comportent un aimant disposé de manière à agir sur l'obturateur pour l'amener dans l'état de réarmement.

Enfin, dans une autre variante, les moyens de séparation comportent un canal ménagé dans la paroi de l'un des tronçons et débouchant en aval de l'obturateur et ne venant, que dans l'état de réarmement, en coïncidence avec une gorge ménagée dans l'autre tronçon et débouchant en amont de l'obturateur. Là encore, il n'y a pas de perte de charge, puisqu'aucune pièce supplémentaire destinée au réarmement n'est prévue en aval de l'obturateur.

L'obturateur est habituellement une bille, bien que ce puisse être également un clapet.

Les moyens de rappel peuvent être constitués également par le fait que l'un des tronçons est élastique ou par le siège lui-même.

Au dessin annexé, donné uniquement à titre d'exemple :
la figure 1 est une vue en coupe d'une partie d'un détendeur raccordée à un tuyau souple, et
les figures 2 à 4 sont des vues similaires de trois variantes.

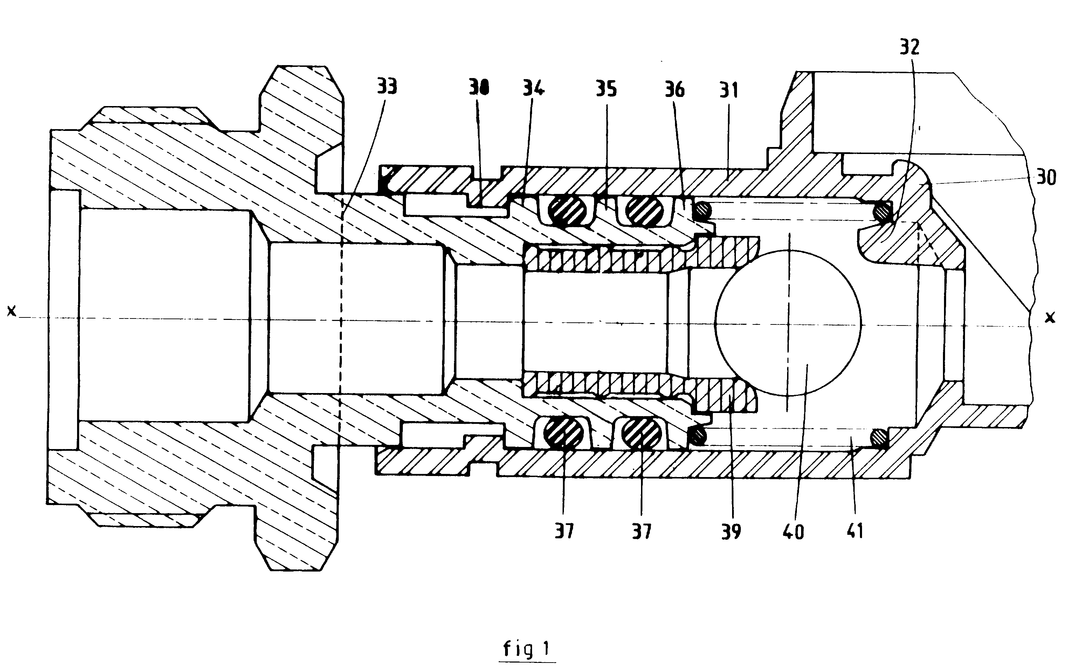

En se reportant à la figure 1, un détendeur 30 comporte une tubulure 31 constituant le tronçon fixe suivant l'invention. A l'intérieur de la tubulure 31 est prévue une butée 32 qui n'est pas de révolution. Dans la tubulure 31 est enfilé le raccord 33 tournant d'un flexible, la tubulure 31 et le raccord 33 constituent les tronçons du conduit et ont le même axe XX'. Ce raccord 33 comporte trois rebords périphériques 34, 35, 36 délimitant deux gorges dans lesquelles sont placés des joints 37 d'étanchéité. L'une des faces frontales du rebord 34 périphérique le plus proche du raccord 33 est repoussée par un ressort 41 contre la face frontale d'un rebord 38 périphérique intérieur de la tubulure 31, ce qui constitue les moyens de retenue des deux tronçons.

Sur le raccord 33 et à l'intérieur de celui-ci est rapporté un siège 39 pour une bille 40 qui peut se déplacer dans l'espace compris entre la butée 32 et le siège 39.

Au repos, c'est-à-dire en fonctionnement normal, la bille 40 est éloignée du siège 39 sous l'effet de son propre poids. S'il se produit un excès de débit en provenance du détendeur, la bille 40 est plaquée sur le siège 39 par l'effet déprimogène pour atteindre la position représentée à la figure. Le débit de gaz est ainsi interrompu. Pour rétablir le passage du gaz, l'utilisateur n'a qu'à déplacer le tronçon 33 à l'encontre de la force du ressort 41 vers la butée 32. Lorsque la bille 40 arrive au contact de la butée 32, elle est repoussée vers le bas en sorte que le passage entre la bille 40 et le siège 39 est à nouveau dégagé.

Pour le montage il suffit d'enfiler la bille 40 dans la tubulure 31 sans avoir à la placer d'une manière particulière, puis d'enfiler le raccord 33 muni du siège 39 dans la tubulure 31.

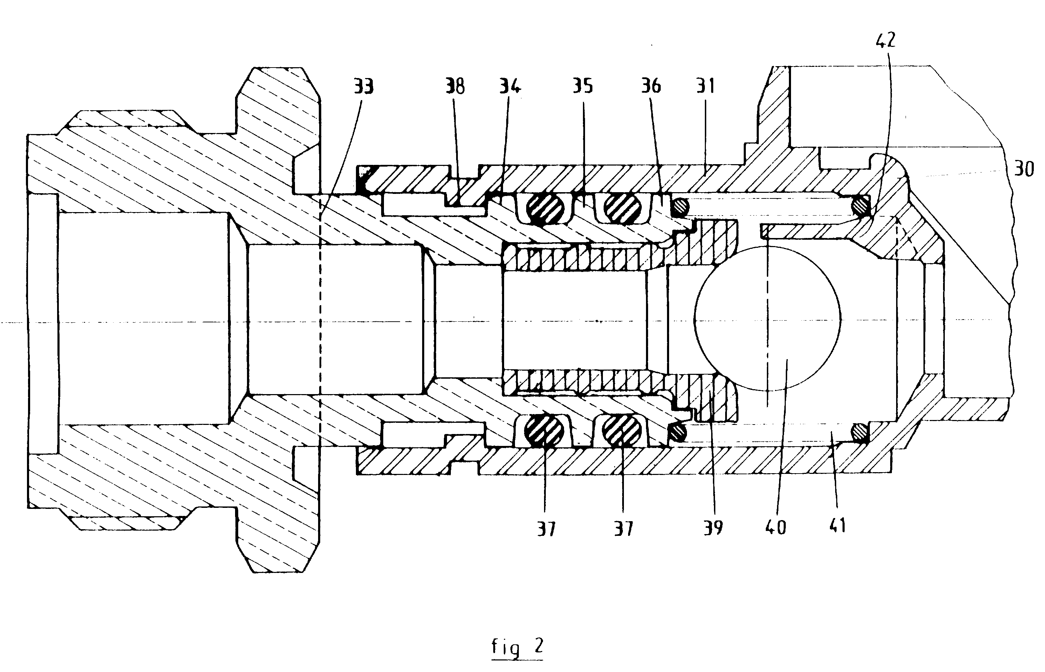

Le mode de réalisation de la figure 2 diffère de celui suivant la figure 1 en ce que la butée 32 est remplacée par une butée 42 conformée de manière à venir en contact avec le siège 39 en l'état de réarmement et par le fait que les tronçons ont une partie sphérique en sorte que leur mouvement relatif est un mouvement d'inclinaison et non plus un mouvement de translation.

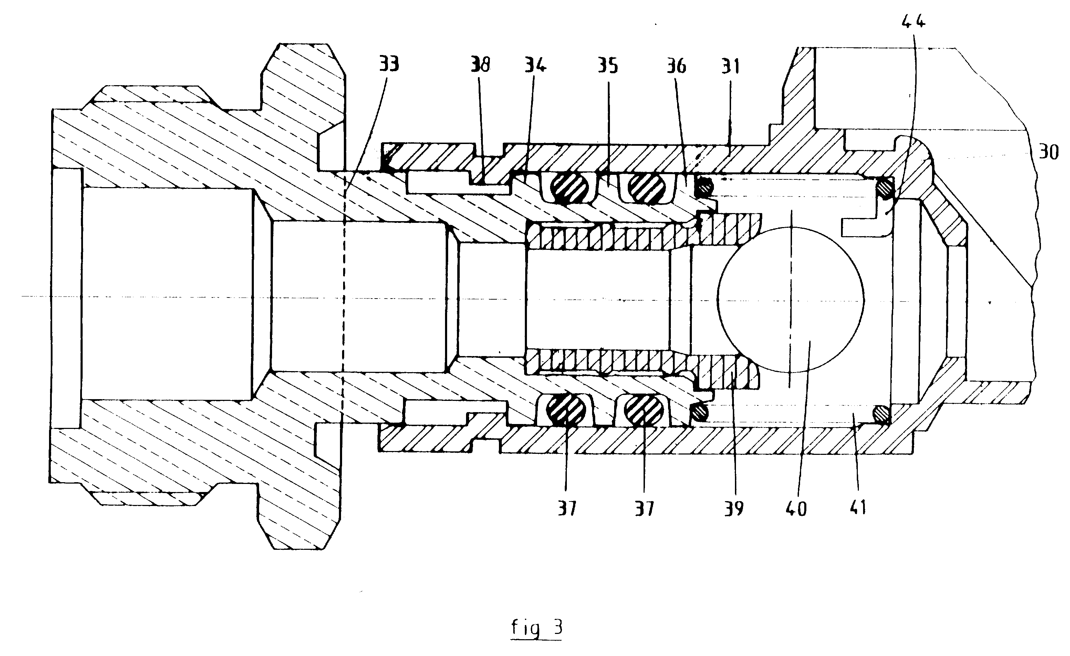

La version suivant la figure 3 diffère de celle de la figure 1 simplement par le fait que la butée 32 est remplacée par une patte 44 solidaire du ressort 41.

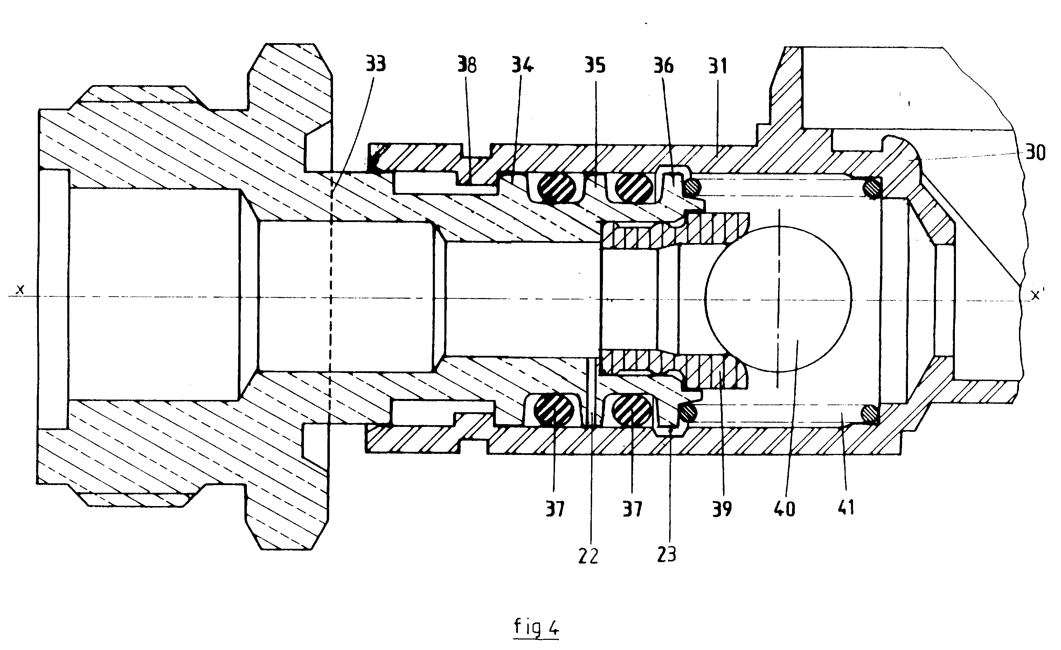

A la figure 4, un canal 22 radial est ménagé dans le tronçon 33. Une gorge 23 est ménagée dans la paroi intérieure du tronçon 31. Il est prévu des moyens permettant de retenir les tronçons 33 et 31 l'un à l'autre avec possibilité de déplacement suivant l'axe XX' en sorte que, quand se déplacement a lieu, le canal 22 vient en coïncidence avec la gorge 23. Du gaz peut alors passer du tronçon 31 au tronçon 33 en passant par la gorge 23, puis par le canal 22 qui débouche à l'intérieur du tronçon 33. Cette communication suffit à rétablir les pressions de part et d'autre de la bille 40 et à permettre le réarmement.

La figure 1 illustre également la version magnétique, dans la mesure où, si la bille 40 est en un matériau magnétique, il suffit que la butée 32 soit constituée d'un aimant.

## Revendications

1. Conduit constitué de deux tronçons (31, 33) enfilés l'un dans l'autre et retenus l'un à l'autre par des moyens de retenus (34, 38) tels qu'ils autorisent un déplacement de l'un des tronçons par rapport à l'autre d'un état de réarmement dans lequel des moyens d'obturation ne peuvent pas empêcher du fluide de passer d'amont en aval à un autre état dans lequel les moyens d'obturation peuvent prendre une position empêchant du fluide de passer ou une position en laissant passer, les moyens d'obturation comportant un obturateur (40) appliqué sur un siège (39) porté par l'un des tronçons, et il est prévu des moyens (32, 42, 44) de séparation de l'obturateur (40) et du siège (39) pour venir dans l'état de réarmement, caractérisé en ce que les moyens (32, 42, 44) de séparation sont disposés en amont de l'obturateur (40).

2. Conduit suivant la revendication 1, caractérisé en ce que les moyens de séparation comportent un élément (32) qui n'est pas symétrique par rapport à l'axe de l'un des tronçons de manière à appliquer à l'obturateur (40), lorsqu'il vient en contact avec celui-ci, une force ayant une composante radiale suffisante pour séparer l'obturateur (40) du siège (39).

3. Conduit suivant la revendication 2, caractérisé en ce que l'élément (32) est solidaire du tronçon (31) qui ne porte pas le siège (39) et, de préférence, est d'une pièce avec ce tronçon (31).

4. Conduit suivant l'une des revendications 1 à 3, caractérisé en ce que les moyens de retenue autorisent un déplacement suivant l'axe commun des tronçons, avec possibilité de rotation d'un tronçon par rapport à l'autre.

5. Conduit suivant la revendication 1 ou 4, caractérisé en ce que les moyens de séparation comportent un élément (42) destiné à déformer ou à repousser le siège (39) pour venir dans l'état de réarmement.

6. Conduit suivant l'une des revendications 1 à 5, caractérisé par des moyens (41) de rappel ramenant les tronçons de l'état de réarmement à l'autre état.

7. Conduit suivant la revendication 5, caractérisé en ce que les moyens de séparation comportent un élément (44) solidaire des moyens (41) de rappel et monté de manière à venir en contact avec l'obturateur (40) ou avec le siège (39) en l'état de réarmement.

8. Conduit suivant la revendication 1, 4 ou 6, caractérisé en ce que l'obturateur est en un matériau magnétique et les moyens de séparation comportent un aimant disposé de manière à agir sur l'obturateur pour l'amener dans l'état de réarmement.

9. Conduit suivant la revendication 1, 4 ou 6, caractérisé en ce que les moyens de séparation comportent un canal (22) ménagé dans la paroi de l'un des tronçons et débouchant en aval de l'obturateur (40) et ne venant que dans l'état de réarmement (70) en coïncidence avec une gorge (23) ménagée dans l'autre tronçon et débouchant en amont de l'obturateur (40).
